# EUROPEAN PATENT APPLICATION

(11) **EP 4 796 901 A2**
(43) Date of publication of application: **26.08.2026**
(21) Application number: 26158845.3
(22) Date of filing: 16.02.2026
(51) Int. Cl.: G01G 13/00

(54) **WEIGHING APPARATUS AND METHOD FOR DETERMINING VERIFICATION MODE IN WEIGHING APPARATUS**

(30) Priority: 21.02.2025 JP 2025026579
(71) Applicant: Ishida Co., Ltd., Kyoto 606-8392 (JP)
(72) Inventor: SUDA, Shoji, Ritto-shi, Shiga 520-3026 (JP); MIZUNO, Emi, Ritto-shi, Shiga 520-3026 (JP)
(74) Representative: Global IP Europe Patentanwaltskanzlei

(57) **Abstract**

A weighing apparatus 1 has a verification mode for determining weighing accuracy. The weighing apparatus 1 includes: a weighing unit 4 that weighs a weight value of an article P; a display unit 6a that displays information related to the article P; a storage unit 10 that stores a first reference value being a value related to weighing accuracy in the weighing unit 4, the first reference value indicating a verification tolerance; a calculation unit 21 that calculates a comparison value being a value related to the current weighing accuracy on the basis of the weight value and that calculates an evaluation value indicating the degree of deviation between the calculated comparison value and the first reference value; and a display control unit 22 that causes the display unit 6a to display the evaluation value as a determination result in the verification mode.

## Description

### TECHNICAL FIELD

One aspect of the present invention relates to a weighing apparatus and a method for determining a verification mode in the weighing apparatus.

### BACKGROUND

Weighing apparatuses for weighing a weight value of an article are known. In order to use such a weighing apparatus for transaction or certification or to ensure appropriate weighing practices, it is necessary to periodically undergo verification by a verifier of an inspection organization and confirm whether the weighing apparatus satisfies predetermined accuracy. For example, in a certain country, whether a weighing apparatus satisfies predetermined accuracy (whether the weighing apparatus has passed verification) is determined on the basis of whether the average value of a plurality of measured values falls within a verification tolerance.

In view of such a situation, there is a weighing apparatus equipped with a function (verification mode) capable of determining in advance whether the weighing apparatus is a device satisfying predetermined accuracy before undergoing verification by an actual verifier. For example, Patent Literature 1 (Japanese Unexamined Patent Publication No. 2022-064521) discloses a weighing apparatus in which the weight of an object is measured a plurality of times in a verification mode, and when the average value of measurement results falls within a verification tolerance, the weighing apparatus is determined to be a "Pass" for satisfying predetermined accuracy, and the determination result ("Pass" or "Fail") is displayed on a display unit.

### SUMMARY

In the conventional weighing apparatus described above, even in a case where a determination result in the verification mode narrowly meets passing criteria and is determined to be a "Pass" on the basis of a measurement value approximate to the verification tolerance, "Pass" is displayed on the display unit. However, in actual verification by a verifier, a determination result may be determined to be a fail due to the influence of rounding in the weighing apparatus or the like. Therefore, there has been a concern that the reliability of the verification mode decreases for a user.

Therefore, an object of one aspect of the present invention is to provide a weighing apparatus capable of improving the reliability of a verification mode for a user, and a method for determining the verification mode in the weighing apparatus.
(1) A weighing apparatus according to one aspect of the present invention is a weighing apparatus having a verification mode for determining weighing accuracy, the weighing apparatus including: a weighing unit configured to weigh a weight value of an article; a display unit configured to display information related to the article; a storage unit configured to store a first reference value being a value related to weighing accuracy in the weighing unit, the first reference value indicating a verification tolerance; a calculation unit configured to calculate a comparison value being a value related to the current weighing accuracy on the basis of the weight value, and to calculate an evaluation value indicating a degree of deviation between the calculated comparison value and the first reference value; and a display control unit configured to cause the display unit to display the evaluation value as a determination result in the verification mode.
   In the weighing apparatus having this configuration, content displayed on the display unit is not "Pass" or "Fail", but rather the comparison value being the value related to the current weighing accuracy and the evaluation value indicating the degree of deviation between the comparison value and the first reference value are displayed. Thus, a user who can recognize what degree of the deviation described above is required for the determination result in the verification mode to be a pass can recognize whether the determination result in the verification mode is a "Pass" or a "Fail". Furthermore, since the user can grasp the degree of deviation described above, the user can recognize the accuracy of "Pass" and "Fail" of the determination result. Thus, the user can grasp the current weighing accuracy of the weighing apparatus in consideration of the influence of, for example, a calculation error of the weighing apparatus or rounding of a weighing value. As a result, the reliability of the verification mode can be improved for the user.
(2) The weighing apparatus according to (1) above further includes a conveyance unit configured to convey the article, and the weighing unit may be configured to weigh the article being conveyed by the conveyance unit. With this configuration, it is possible to provide the verification mode to the user and improve the reliability of the verification mode even in the automatic catchweighing instrument that weighs an article being conveyed by the conveyance unit.
(3) In the weighing apparatus according to (1) or (2) above, the comparison value is the average value of errors between each of a plurality of weight values, which is obtained by weighing an object to be weighed a plurality of times by the weighing unit, the object to be weighed being of a known first weight prepared in advance, and the first weight, the evaluation value is a value obtained by dividing the comparison value by the first reference value, and the object to be weighed may be a test piece. With this configuration, the user can grasp the current state of the weighing accuracy in the weighing apparatus on the basis of the evaluation value calculated on the basis of the weight value actually weighed by the weighing unit.
(4) The display control unit of the weighing apparatus according to (3) above may cause the display unit to display each of the plurality of weight values and an error between each of the plurality of weight values and the first weight. With this configuration, it is possible to easily grasp the weighing accuracy of the weighing unit for each weighing operation because each of the plurality of weight values and errors between the plurality of weight values and a plurality of first weights are displayed on the display unit.
(5) In the weighing apparatus according to any one of (1) to (4) above, the display control unit may display the evaluation value in percent. With this configuration, since the user can easily recognize the degree of deviation between the comparison value and the first reference value, the user can intuitively grasp the current weighing accuracy in the weighing apparatus.
(6) The weighing apparatus according to any one of (1) to (5) above may further include a changing unit configured to change the first reference value stored in the storage unit to a value designated by a user. With this configuration, the user can freely set a determination level in the verification mode.
(7) The weighing apparatus according to any one of (1) to (6) above may further include: a reception unit configured to receive a second reference value different from the first reference value; and a determination unit configured to determine whether the weighing accuracy is appropriate on the basis of the evaluation value and the second reference value. With this configuration, for example, the first reference value can be set to a reference value or the like based on verification, and the second reference value can be set to a company-specific reference value or the like. Thus, it is possible to provide the user with a determination result of the weighing accuracy of the weighing apparatus, the determination result being based on the company's own standard.
(8) The weighing apparatus according to (7) above may further include a notification unit configured to notify that the weighing accuracy is not appropriate in a case where the determination unit determines that the weighing accuracy is not appropriate. With this configuration, it is possible to cause the user to recognize that the weighing accuracy of the weighing apparatus is determined to be not appropriate on the basis of the second reference value.
(9) A method for determining a verification mode in a weighing apparatus according to one aspect of the present invention includes: a weighing step of weighing a weight value of an article using a weighing apparatus having a verification mode for determining weighing accuracy; a storage step of storing a first reference value being a value related to the weighing accuracy in the weighing step, the first reference value indicating a verification tolerance; a calculation step of calculating a comparison value being a value related to the current weighing accuracy on the basis of the weight value, and calculating an evaluation value indicating a degree of deviation between the calculated comparison value and the first reference value; and an output step of outputting the evaluation value as a determination result in the verification mode.

In the method for determining the verification mode in such a weighing apparatus, content displayed on the display unit is not "Pass" or "Fail", but rather the comparison value being a value related to the current weighing accuracy and the evaluation value indicating the degree of deviation between the comparison value and the first reference value are displayed. Thus, a user who can recognize what degree of the deviation described above is required for the determination result in the verification mode to be a pass can recognize whether the determination result in the verification mode is a "Pass" or a "Fail". Furthermore, since the user can grasp the degree of deviation described above, the user can recognize the accuracy of "Pass" and "Fail" of the determination result. Thus, the user can grasp the current state of the weighing accuracy of the weighing apparatus in consideration of the influence of, for example, a calculation error of the weighing apparatus or rounding of a weighing value. As a result, the reliability of the verification mode can be improved for the user.

According to one aspect of the present invention, it is possible to improve the reliability of the verification mode for the user.

### BRIEF DESCRIPTION OF THE DRAWINGS

FIG. 1 is a schematic configuration diagram of a weighing apparatus according to one embodiment;
FIG. 2 is a block diagram illustrating a functional configuration of the weighing apparatus in FIG. 1;
FIG. 3 is an example of a display screen displayed on a display unit in a verification mode;
FIG. 4 is another example of the display screen displayed on the display unit in the verification mode;
FIG. 5 is still another example of the display screen displayed on the display unit in the verification mode; and
FIG. 6 is a flowchart illustrating a flow of a method for determining the verification mode in the weighing apparatus according to the one embodiment.

### DETAILED DESCRIPTION

Hereinafter, a weighing apparatus 1 according to one embodiment and the operation thereof (method for determining a verification mode in the weighing apparatus) will be described with reference to the drawings. In the description of the drawings, the same elements are denoted by the same reference signs, and redundant description will be omitted. In addition, "A or B" in the present specification may include any one of A and B, and including both A and B is not excluded.

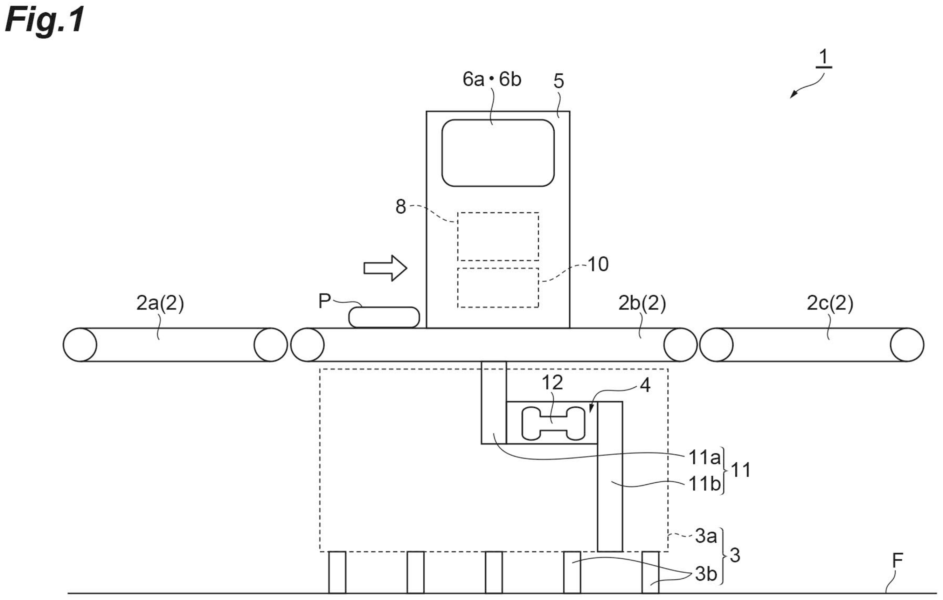

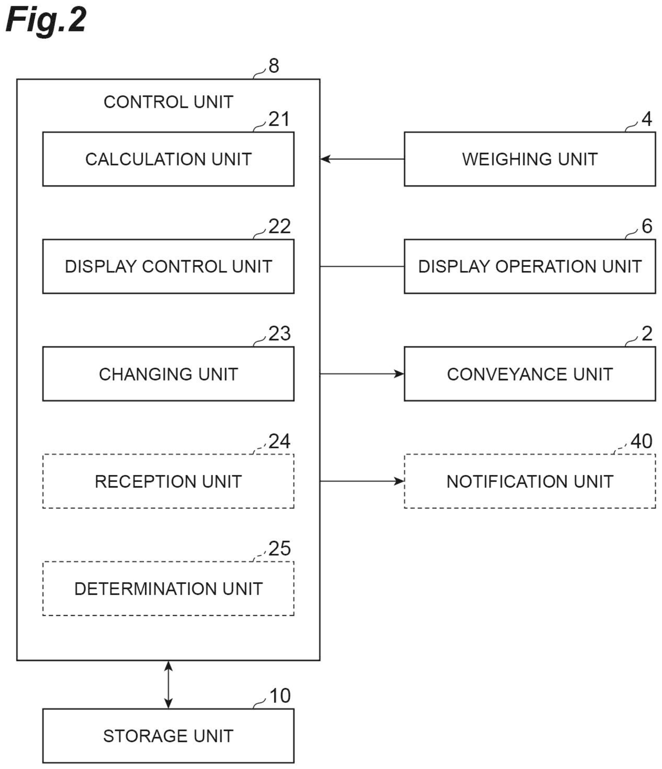

As illustrated in FIGS. 1 and 2, the weighing apparatus 1 is a device that weighs an article P that is an object to be measured while conveying the article P in a direction of an arrow in FIG. 1 (hereinafter, simply referred to as the "conveyance direction"). The article P that is an object to be measured is continuously conveyed from an upstream side. The weighing apparatus 1 includes a conveyance unit 2, a base 3, a weighing unit 4, a main body unit 5, a display operation unit 6, a storage unit 10, and a control unit 8.

The conveyance unit 2 is a conveyance device capable of conveying the article P along the conveyance direction, and is, for example, a belt conveyor. The conveyance unit 2 conveys the article P, for example, at a conveyance speed designated via the display operation unit 6. The conveyance unit 2 includes a first conveyor unit 2a, a second conveyor unit 2b, and a third conveyor unit 2c. The first conveyor unit 2a, the second conveyor unit 2b, and the third conveyor unit 2c are arranged in order from the upstream side in the conveyance direction.

The first conveyor unit 2a is a conveyor that conveys the article P into the second conveyor unit 2b. The first conveyor unit 2a may include, for example, a metal detector or the like (not illustrated). The second conveyor unit 2b is a conveyor that conveys the article P conveyed from the first conveyor unit 2a into the third conveyor unit 2c. The weighing unit 4 is mounted on the second conveyor unit 2b. Therefore, the article P conveyed by the conveyance unit 2 is weighed on the second conveyor unit 2b. In addition, a sensor that detects the presence or absence of the article P may be provided on each of the upstream side and the downstream side of the second conveyor unit 2b. In this case, it is possible to easily determine whether the entire article P is located on the second conveyor unit 2b. The third conveyor unit 2c is a conveyor that conveys the article P out of the second conveyor unit 2b. The third conveyor unit 2c includes, for example, a distributing machine (not illustrated) that distributes the article P whose weight deviates from an appropriate range.

The base 3 is a member that houses and supports the weighing unit 4, and is fixed to a floor F below the conveyance unit 2. The base 3 has a main body 3a that houses the weighing unit 4 and a plurality of legs 3b located between the main body 3a and the floor F. In FIG. 1, the main body 3a is illustrated by a broken line.

The weighing unit 4 weighs a weight value of the article P located on the second conveyor unit 2b. The weighing unit 4 is configured to weigh the article P being conveyed by the second conveyor unit 2b. The weighing unit 4 includes a strain body 11 that undergoes compression and tension according to a load and a weighing cell 12 that weighs the article P located on the second conveyor unit 2b. The strain body 11 includes a movable rigid portion 11a that supports the second conveyor unit 2b and a fixed rigid portion 11b fixed to the base 3. One end of the movable rigid portion 11a is connected to the upstream end of the second conveyor unit 2b, and the other end of the movable rigid portion 11a is connected to the weighing cell 12. One end of the fixed rigid portion 11b is connected to the weighing cell 12, and the other end of the fixed rigid portion 11b is connected to the main body 3a of the base 3. Although not illustrated, in the weighing cell 12, a plurality of strain gauges attached to the strain body 11 is connected to a Wheatstone bridge circuit.

The main body unit 5 is a box extending in a vertical direction, and is supported by the main body 3a or the legs 3b of the base 3. The main body unit 5 supports or incorporates the display operation unit 6, the storage unit 10, and the control unit 8.

The display operation unit 6 displays various types of information handled by the weighing apparatus 1, and receives an operation of each unit in the weighing apparatus 1 from a user. The display operation unit 6 is supported by the base 3. The display operation unit 6 includes a display unit 6a and an operation unit 6b.

The display unit 6a displays an image based on the display information output from the control unit 8. The display unit 6a displays information related to the article P. More specifically, the display unit 6a displays, for example, a weighing value indicating a weighing result of the weight of the article P, a conveyance speed of the conveyance unit 2, a dimension of the article P along the conveyance direction, a conveyance frequency of the article P, a weighing pitch of the article P, information for evaluating accuracy of the weighing value handled in the verification mode to be described in detail later, and the like. The operation unit 6b receives designation from the user as input information, and outputs the received input information to the control unit 8. An example of the operation unit 6b is a touch panel that functions as an external input unit.

The storage unit 10 stores various types of information handled by the weighing apparatus 1. The storage unit 10 includes, for example, a RAM, a solid state drive (SSD), a hard disk drive (HDD), or the like. The storage unit 10 of the present embodiment stores a first reference value. Details of the first reference value will be described in detail later.

The control unit 8 is a controller that controls each member included in the weighing apparatus 1, and is incorporated in the main body unit 5. The control unit 8 includes a central processing unit (CPU), a random access memory (RAM), a read only memory (ROM), and the like. The control unit 8 outputs, for example, an operation signal for controlling the conveyance speed of the conveyance unit 2 designated via the display operation unit 6 to the conveyance unit 2. In addition, for example, in a case where the third conveyor unit 2c is provided with a distributing machine, when the control unit 8 determines that the weight of the article P deviates from a preset appropriate range, the control unit 8 outputs an operation signal to the distributing machine to cause the distributing machine to distribute (exclude from a line) the article P.

The weighing apparatus 1 has the verification mode for determining weighing accuracy. The verification mode implemented in the weighing apparatus 1 according to the present embodiment is a function for determining in advance whether the weighing apparatus 1 has passed verification performed by a public agency or inspection performed by a designated business operator before the weighing apparatus 1 undergoes verification or inspection. Note that the term "verification" as used herein refers to an act of inspecting a specific weighing instrument in accordance with a certain standard and confirming whether the weighing instrument has passed the standard in order to publicly guarantee the accuracy of the measuring instrument, the specific weighing instrument being used for weighing in transactions or certifications, the specific weighing instrument being defined by a cabinet order as a weighing instrument for which a standard related to the structure or instrumental error of the measuring instrument is required to be defined in order to ensure appropriate weighing. Note that the verification mode of the present embodiment refers to a mode for determining whether the weighing apparatus 1 can pass the verification or the inspection described above before production of a commodity (that is, in a state of being completely separated from the production of a commodity), unlike inspection for confirming the certainty of weighing by the weighing unit every predetermined time or every time a predetermined number of the commodities is produced during production of the commodity, for example.

The control unit 8 implements various functions, for example, by loading a program stored in the ROM onto the RAM and executing the program on the CPU. The control unit 8 receives a mode change from a normal mode to the verification mode via the display operation unit 6. In a case where the control unit 8 executes the verification mode, the control unit 8 forms a calculation unit 21, a display control unit 22, and a changing unit 23.

The calculation unit 21 calculates a comparison value being a value related to the current weighing accuracy on the basis of the weight value weighed by the weighing unit 4, and calculates an evaluation value indicating the degree of deviation between the calculated comparison value and the first reference value. The first reference value is stored in the storage unit 10. The first reference value is a value related to the weighing accuracy in the weighing unit 4 and is a predetermined value. In the present embodiment, the first reference value is a value indicating a verification tolerance. Note that the verification tolerance refers to an instrument error (error) allowed for the weighing apparatus to pass verification.

An example of the comparison value is the average value of errors between each of a plurality of weight values, which is obtained by weighing an object to be weighed of a known first weight prepared in advance a plurality of times by the weighing unit 4, and the first weight. For example, it is assumed that 100 g of a test piece (hereinafter, also referred to as sample) is prepared, and the test piece is weighed 3 times in the verification mode in the weighing apparatus 1 having the configuration described above. Here, it is assumed that weight values obtained by weighing by the weighing unit 4 are 100.016 g, 100.023 g, and 100.019 g. The comparison value can be the average value of measurement errors of these weight values ((100.016 + 100.023 + 100.019)/3 = 100.019). Other examples of the comparison value include the average deviation of the errors described above, as described later.

The evaluation value can be a value obtained by dividing the comparison value calculated by the method described above by the first reference value. In a case where the first reference value stored in the storage unit 10 is, for example, 0.025, the evaluation value is 0.76 (100.19/0.025). In a case where the evaluation value is 1 or less, this indicates that the verification results in a pass, and in a case where the evaluation value is more than 1, this indicates that the verification results in a fail.

The display control unit 22 causes the display unit 6a to display the evaluation value described above as a determination result in the verification mode. In the present embodiment, the display control unit 22 displays the evaluation value described above in percent. The display control unit 22 displays the evaluation value calculated as 0.76 described above as 76.0%. In other words, in a case where the evaluation value displayed in percent is 100% or less, this indicates that the verification results in a pass, and in a case where the evaluation value is more than 100%, this indicates that the verification results in a fail. Note that the display control unit 22 may display the calculated numerical value of 0.76 as it is instead of displaying the evaluation value in percent.

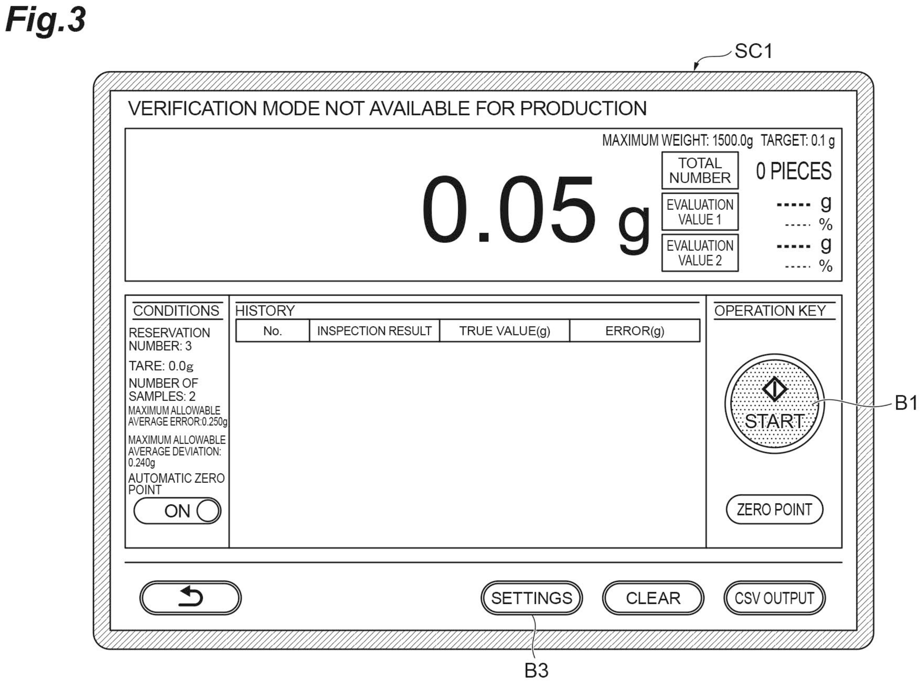

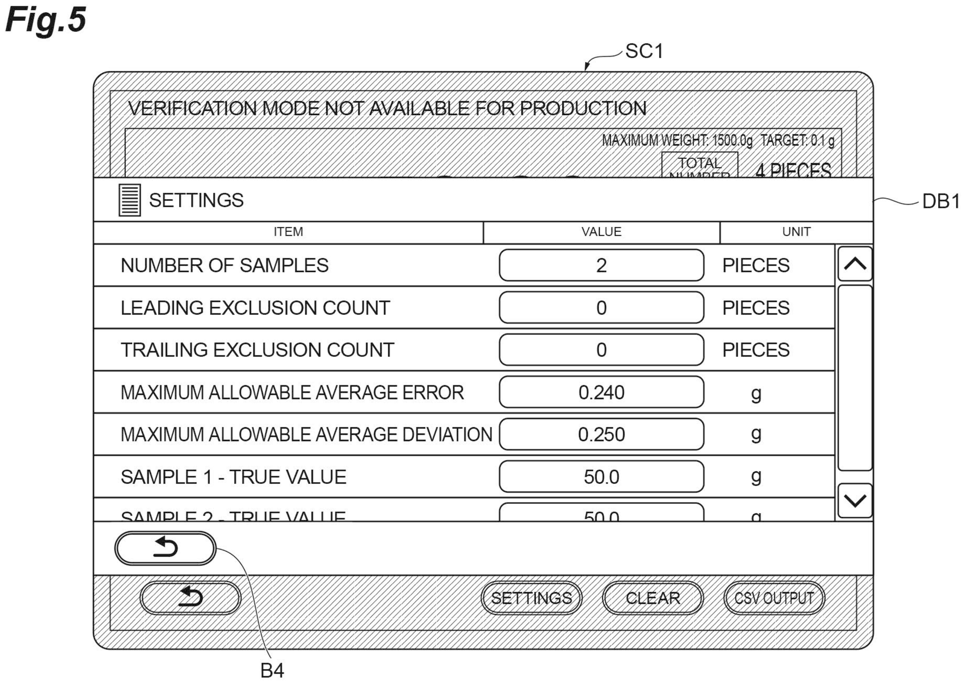

The changing unit 23 changes the first reference value stored in the storage unit 10 to a value designated by the user. For example, the changing unit 23 receives the changed first reference value from the user via the display operation unit 6, and overwrites the storage unit 10. Specifically, the changing unit 23 receives information regarding the new first reference value from the user via a setting dialog DB1 (see FIG. 5) displayed by operating a setting button B3 as illustrated in FIG. 3. The changing unit 23 that has received the new first reference value overwrites the storage unit 10. Thus, the first reference value stored in the storage unit 10 can be changed to a value designated by the user.

Note that, in the setting dialog DB1 as illustrated in FIG. 5, it is possible to set a maximum allowable error, a maximum allowable standard deviation, the number of types of test pieces to be weighed in the verification mode, a true value for each test piece, the number of times of weighing (not illustrated), and the like, which are the first reference values. When a return button B4 is operated, the reception of the change is completed.

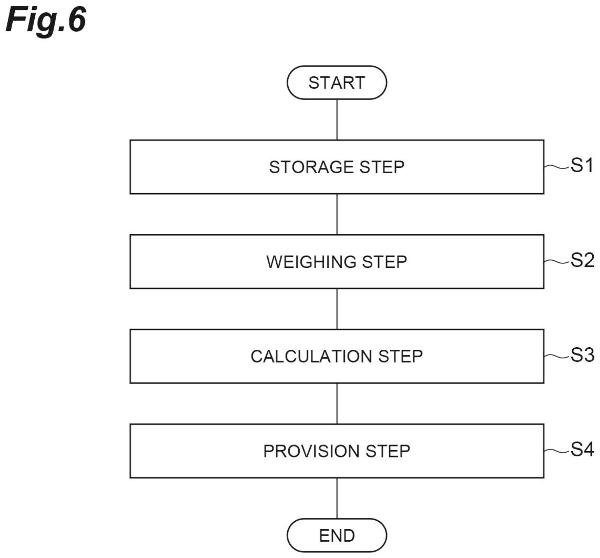

Next, with reference to FIG. 6, the method for determining the verification mode in the weighing apparatus 1 having the configuration described above will be described. As illustrated in FIG. 6, the method for determining the verification mode described above includes a storage step S1, a weighing step S2, a calculation step S3, and an output step S4.

The storage step S1 stores the first reference value being a value related to weighing accuracy used in the weighing step S2 and indicating the verification tolerance. Examples of the first reference value include a maximum allowable average error, a maximum allowable average deviation.

In the weighing step S2, the weight value of the article P is weighed using the weighing apparatus 1 having the verification mode for determining the weighing accuracy. In the weighing apparatus 1 according to the embodiment described above, when the change to the verification mode is received via the display operation unit 6, display content displayed on the display unit 6a is switched to a verification mode screen SC1 as illustrated in FIG. 3. In the verification mode screen SC1, for example, a message "VERIFICATION MODE NOT AVAILABLE FOR PRODUCTION" is displayed on a part of the verification mode screen SC1, and it is clearly indicated so that the user can understand that the weighing apparatus 1 is not in a production mode for producing a commodity. When a start button B1 is operated in the verification mode, weighing in the verification mode is enabled.

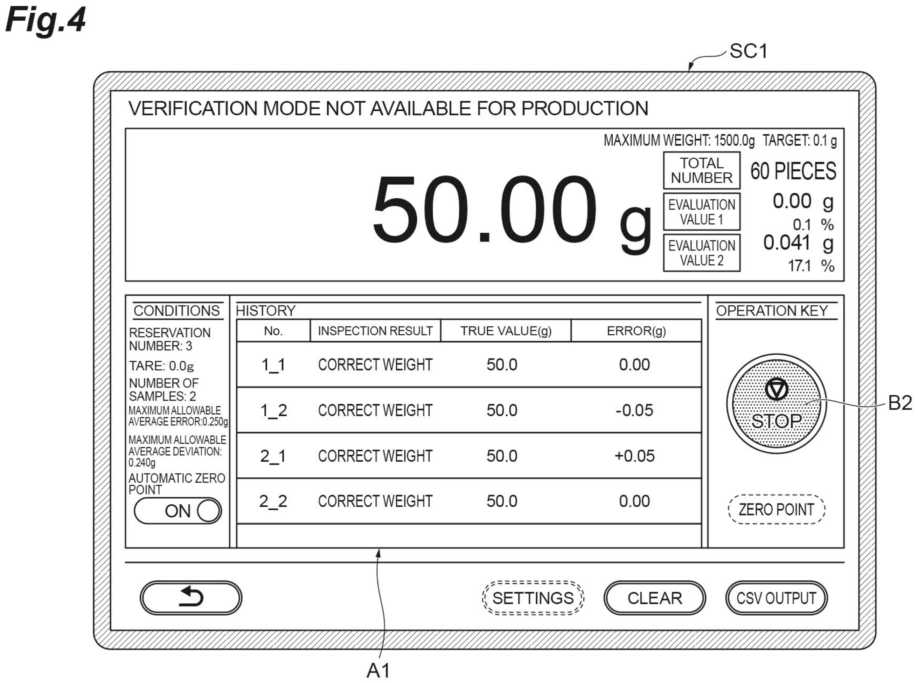

When the weighing in the verification mode is started, the weighing result of a test piece is displayed on the display unit 6a as illustrated in FIG. 4. FIG. 4 illustrates the verification mode screen SC1 in a case where the determination of the weighing accuracy is performed by weighing each of 2 types (a plurality) of test pieces having a true value of 50 g 60 times. On the verification mode screen SC1, information on a weight value being the weighing result of each of the 2 types of test pieces and an error with respect to the true value (50 g) thereof is displayed on a history display unit A1. Note that when a stop button B2 is operated, the weighing in the verification mode is interrupted.

The former numerical value of "1_1" described as No. in the history display unit A1 indicates the number of times of weighing. In addition, the latter numerical value of "1_1" described as No. in the history display unit A1 indicates the type of the test piece. In the present embodiment, since there are 2 types of test pieces, there are "1" and "2". In other words, "1_1" described as No. in the history display unit A1 indicates the "1st" weighing of the test piece of the type "1", "1_2" indicates the "1st" weighing of the test piece of the type "2", "2_1 " indicates the "2nd" weighing of the test piece of the type "1", and "2_2" indicates the "2nd" weighing of the test piece of the type "2". Although not illustrated in FIG. 4, weighing results up to the 60th time thereafter are displayed for the test pieces of the type "1" and the type "2".

In the calculation step S3, the comparison value being a value related to the current weighing accuracy is calculated on the basis of the weight value weighed by the weighing unit 4, and the evaluation value indicating the degree of deviation between the calculated comparison value and the first reference value is calculated as a determination result in the verification mode. In the present embodiment, the degree of deviation between the comparison value and the first reference value when the first reference value described above is defined as the "maximum allowable average error" and the comparison value described above is defined as the "average error" is displayed as an evaluation value 1 as illustrated in FIG. 4 (the output step S4). Note that a numerical value displayed in g as the evaluation value 1 is the "average error" as the comparison value, and a numerical value displayed in percent (%) is the "evaluation value" as the degree of deviation between the comparison value and the first reference value.

In addition, in the present embodiment, the degree of deviation between the comparison value and the first reference value when the first reference value described above is defined as the "maximum allowable average deviation" and the comparison value described above is defined as the "average deviation" is displayed as an evaluation value 2 as illustrated in FIG. 4 (the output step S4). Note that a numerical value displayed in g as the evaluation value 2 is the "average deviation" as the comparison value, and a numerical value displayed in percent (%) is the "evaluation value" as the degree of deviation between the comparison value and the first reference value.

The operational effects of the weighing apparatus 1 according to the embodiment described above will be described. In the weighing apparatus 1 according to the embodiment described above, content displayed on the display unit 6a is not "Pass" or "Fail", but the evaluation value (evaluation value 1 and evaluation value 2) indicating the degree of deviation between the comparison value with respect to the first reference value and the first reference value is displayed as illustrated in FIG. 4. Thus, the user who can recognize what degree of the deviation described above is required for the determination result in the verification mode to be a pass can recognize whether the determination result in the verification mode is a "Pass" or a "Fail" when the user sees numerical values displayed as the evaluation value 1 and the evaluation value 2 described above.

Furthermore, since the user can grasp the degree of deviation described above on the basis of the evaluation value 1 and the evaluation value 2 described above, the user can recognize the accuracy of "Pass" and "Fail" of the determination result. In other words, as illustrated in FIG. 4, the user sees the evaluation value 1 and the evaluation value 2 displayed in percent and can recognize whether the weighing apparatus 1 has narrowly passed verification because the evaluation value 1 and the evaluation value 2 are numerical values close to 100% or whether the weighing apparatus 1 has passed verification with margin because the evaluation value 1 and the evaluation value 2 are numerical values far from 100%. Thus, the user can grasp the current state of the weighing accuracy of the weighing apparatus 1 in consideration of the influence of, for example, a calculation error of the weighing apparatus 1 or rounding of a weighing value. As a result, the reliability of the verification mode can be improved for the user.

The weighing unit 4 of the weighing apparatus 1 according to the embodiment described above is configured to weigh the article P being conveyed by the second conveyor unit 2b. With this configuration, it is possible to provide the verification mode to the user and improve the reliability of the verification mode, even in the automatic catchweighing instrument that weighs the article P being conveyed by the second conveyor unit 2b.

In the weighing apparatus 1 according to the embodiment described above, the comparison value is the average value of errors between each of a plurality of weight values, which is obtained by weighing an object to be weighed of a known first weight prepared in advance a plurality of times by the weighing unit 4, and the first weight, the evaluation value is a value obtained by dividing the comparison value by the first reference value, and the object to be weighed is a test piece. With this configuration, the user can grasp the current state of the weighing accuracy in the weighing apparatus 1 on the basis of the evaluation value calculated on the basis of the actual weight value by the weighing unit 4.

The display control unit 22 of the weighing apparatus 1 according to the embodiment described above causes the display unit 6a to display each of the plurality of weight values and an error between each of the plurality of weight values and the first weight (see FIG. 4). Thus, it is possible to easily grasp the weighing accuracy of the weighing unit 4 for each weighing operation.

As illustrated in FIG. 4, the display control unit 22 of the weighing apparatus 1 according to the embodiment described above displays the evaluation value 1 and the evaluation value 2 in percent. With this configuration, since the user can easily recognize the degree of deviation between the comparison value and the first reference value, the user can intuitively grasp the current weighing accuracy in the weighing apparatus 1.

Although the one embodiment has been described above, one aspect of the present invention is not limited to the embodiment described above. Various modifications can be made without departing from the gist of the invention.

For example, in addition to the configuration of the embodiment described above, there may be further included a reception unit 24 that receives a second reference value different from the first reference value, a determination unit 25 that determines whether the weighing accuracy is appropriate on the basis of the evaluation value 1, the evaluation value 2, and the second reference value described above, and a notification unit 40 that notifies that the weighing accuracy is not appropriate in a case where the determination unit 25 determines that the weighing accuracy is not appropriate. Examples of the notification unit 40 include the display operation unit 6, a speaker, a sign pole.

Examples of the second reference value include a company-specific reference value. More specific examples of the second reference value include numerical ranges such as "∘∘% < evaluation value 1 < ∘∘%" and "∘∘% < evaluation value 2 < ∘∘%". In a weighing apparatus 1 having a configuration according to such a modification, in addition to the evaluation value 1 and the evaluation value 2 described in the embodiment described above, it is possible to provide a user with a determination result of the weighing accuracy of the weighing apparatus 1 based on own standard.

In the embodiment and the modification described above, an example in which the evaluation value 1 and the evaluation value 2 are calculated by weighing the 2 types of test pieces in the verification mode has been described, but the invention is not limited to the example. For example, instead of or in addition to the 2 types of test pieces, an evaluation value 1 and an evaluation value 2 may be calculated by weighing an article that is used in actual production and has a known weight.

In the embodiment described above and the modification described above, an example of calculating the evaluation value 1 and the evaluation value 2 using the 2 types of test pieces has been described; however, only the evaluation value 1 may be calculated, or only the evaluation value 2 may be calculated.

## Claims

1. A weighing apparatus configured to perform a verification mode for determining weighing accuracy, the weighing apparatus comprising:
a weighing unit configured to weigh a weight value of an article;
a display unit configured to display information related to the article;
a storage unit configured to store a first reference value being a value related to weighing accuracy in the weighing unit, the first reference value indicating a verification tolerance;
a calculation unit configured to calculate a comparison value being a value related to the current weighing accuracy on the basis of the weight value, and to calculate an evaluation value indicating a degree of deviation between the calculated comparison value and the first reference value; and
a display control unit configured to cause the display unit to display the evaluation value as a determination result in the verification mode.

2. The weighing apparatus according to claim 1, further comprising:
a conveyance unit configured to convey the article, wherein
the weighing unit is configured to weigh the article being conveyed by the conveyance unit.

3. The weighing apparatus according to claim 1 or 2, wherein
the comparison value is an average value of errors between each of a plurality of the weight values and a known first weight, the plurality of the weight values being obtained by weighing an object to be weighed a plurality of times by the weighing unit, the object to be weighed having the first weight, and
the evaluation value is a value obtained by dividing the comparison value by the first reference value.

4. The weighing apparatus according to claim 3, wherein the display control unit is configured to cause the display unit to display each of the plurality of the weight values and an error between each of the plurality of weight values and the first weight.

5. The weighing apparatus according to any one of claims 1 to 4, wherein the display control unit is configured to display the evaluation value as a percentage.

6. The weighing apparatus according to any one of claims 1 to 5, further comprising:
a changing unit configured to change the first reference value stored in the storage unit to a value designated by a user.

7. The weighing apparatus according to any one of claims 1 to 6, further comprising:
a reception unit configured to receive a second reference value different from the first reference value; and
a determination unit configured to determine whether the weighing accuracy is appropriate on the basis of the evaluation value and the second reference value.

8. The weighing apparatus according to claim 7, further comprising:
a notification unit configured to output a notification that the weighing accuracy is not appropriate in a case where the determination unit determines that the weighing accuracy is not appropriate.

9. A method for determining a verification mode in a weighing apparatus, the method comprising:
a weighing step of weighing a weight value of an article using a weighing apparatus having a verification mode for determining weighing accuracy;
a storage step of storing a first reference value being a value related to the weighing accuracy in the weighing step, the first reference value indicating a verification tolerance;
a calculation step of calculating a comparison value being a value related to the current weighing accuracy on the basis of the weight value, and calculating an evaluation value indicating a degree of deviation between the calculated comparison value and the first reference value; and
an output step of outputting the evaluation value as a determination result in the verification mode.
